# EUROPEAN PATENT APPLICATION

(11) **EP 4 779 268 A1**
(43) Date of publication of application: **22.07.2026**
(21) Application number: 24865758.7
(22) Date of filing: 04.09.2024
(51) Int. Cl.: G01D 5/12, H02K 11/215, H02K 11/01

(54) **ENCODER**

(30) Priority: 14.09.2023 KR 20230122627
(71) Applicant: LG Innotek Co., Ltd., Seoul 07796 (KR)
(72) Inventor: LEE, Gyu Lin, Seoul 07796 (KR); NAM, Taek Hoon, Seoul 07796 (KR); BAE, Seok, Seoul 07796 (KR)
(74) Representative: DREISS Patentanwälte PartG mbB
(86) International application number: PCT/KR2024/013340
(87) International publication number: WO 2025/058317

(57) **Abstract**

The encoder according to an embodiment comprises: a shaft; a ring magnet connected to the shaft; a case accommodating at least a part of the shaft and the ring magnet; and a shielding member protruding from the case in a first direction perpendicular to the axial direction of the shaft.

## Description

### [Technical Field]

Embodiments relate to an encoder.

### [Background Art]

A rotary encoder tracks direction changes and rotation of a motor shaft and generates digital information about position and motion. Types of rotary encoders include an incremental type, an absolute type, a magnetic type, and an optical type, and regardless of the type, the rotary encoders perform the same function.

In particular, a rotary magnetic encoder has various advantages, including stable operation in environments subject to severe impact or vibration or in high-temperature environments, strong resistance to external environmental factors such as dust, a compact size, and low manufacturing cost. Accordingly, rotary magnetic encoders are widely used in precise and complex devices requiring motion control operations, such as automotive anti-lock brake systems (ABS), industrial automation equipment, medical devices, and robots. In addition, types of rotary magnetic encoders include an incremental type, an absolute type, a non-contact type, a bearing type, and a rotary type.

However, when magnetized debris enters a rotary magnetic encoder or is positioned in the vicinity of the rotary magnetic encoder, performance of the rotary magnetic encoder may be degraded. Therefore, in order to prevent the influence of a strong external magnetic field, a shielding member formed of a material having high magnetic permeability (4,000 or greater) and implemented in a case form may be employed to protect a sensor and a magnet included in the rotary magnetic encoder. In this case, the shielding function may be sufficiently achieved. However, for functions other than shielding, for example, for connection of the encoder to another external structure, a separate member needs to be added to the encoder, which may increase manufacturing cost and complicate the structure.

In addition, even when the case is implemented as a shielding member, an external magnetic field readily penetrates the case through a passage through which a connector is introduced from outside to be connected to the encoder, thereby interfering with accurate sensing of a magnetic field by a sensor positioned inside the encoder. Therefore, research addressing this issue is being conducted.

### [Disclosure]

### [Technical Problem]

Embodiments provide an encoder capable of accurately sensing a magnetic field.

### [Technical Solution]

An encoder according to an embodiment may include a shaft, a ring magnet connected to the shaft, a case configured to accommodate at least a portion of the shaft and the ring magnet, and a shielding linkage disposed to protrude from the case in a first direction orthogonal to an axial direction of the shaft.

In an example, the encoder may further include a sensor disposed to face the ring magnet and a substrate coupled and fixed to the case, the sensor being disposed on the substrate.

In an example, the shielding linkage may protrude from one side of the case in the first direction.

In an example, the case may include an upper plate, a lower plate disposed below the upper plate, and a middle plate coupled to the upper plate and the lower plate and including an accommodation space defined therein to accommodate at least a portion of the shaft, the ring magnet, and the sensor.

In an example, the shieling linkage may include an upper shielding portion protruding from one side of the upper plate in the first direction and a lower shielding portion protruding from one side of the lower plate in the same direction as a protruding direction of the upper shielding portion.

In an example, the rotary magnetic encoder may further include a cable connected to the sensor, and the case may include a connection opening formed therein to communicate with an outside and to allow the cable to be introduced into the connection opening.

In an example, the connection opening and the shaft may face each other in the first direction, and each of the upper shielding portion and the lower shielding portion may face the shaft in a second direction.

In an example, the first direction and the second direction may be identical to each other or may be orthogonal to each other.

In an example, at least a portion of each of the upper shielding portion and the lower shielding portion may have a rectangular shape.

In an example, at least a portion of each of the upper shielding portion and the lower shielding portion may have a semicircular planar shape.

In an example, the ring magnet may be disposed below the upper plate, the sensor may be disposed below the ring magnet, and the substrate may be disposed below the sensor and above the lower plate.

In an example, a width of each of the upper shielding portion and the lower shielding portion in a second direction orthogonal to the first direction corresponding to a protruding direction of each of the upper shielding portion and the lower shielding portion may be 33% or more of an outer diameter of the upper plate.

In an example, a length from a center of the shaft to an end of at least one of the upper shielding portion or the lower shielding portion in the first direction may be 91% or more of an outer diameter of the upper plate.

In an example, the length when the first horizontal direction and the second horizontal direction are orthogonal to each other may be 120% to 195% of the length when the first horizontal direction and the second horizontal direction are identical to each other.

In an example, a width of the connection opening in the second direction may be 25% to 100% of a width of at least one of the upper shielding portion or the lower shielding portion in the second direction.

In an example, a height of the connection opening in a third direction orthogonal to each of the first and second directions may be 57% to 95% of a width of at least one of the upper shielding portion or the lower shielding portion in the second direction.

### [Advantageous Effects]

A rotary magnetic encoder according to an embodiment includes a shielding linkage and thus is less affected by an external magnetic field. Accordingly, the rotary magnetic encoder may accurately sense a rotation angle of a shaft, and may be easily connected to an external structure due to the shielding linkage, thereby simplifying a manufacturing process or reducing a manufacturing cost.

### [Description of Drawings]

FIG. 1A is a perspective view showing an external appearance of an encoder according to an embodiment.
FIG. 1B is a plan view of the encoder shown in FIG. 1A.
FIG. 1C is a side cross-sectional view of an encoder according to another embodiment.
FIG. 1D is a right side view of the encoder shown in FIG. 1A when viewed from the right.
FIGs. 2A and 2B are, respectively, a perspective view and a plan view of an encoder according to another embodiment.
FIG. 3 is a perspective view of an encoder according to still another embodiment.
FIG. 4 is a three-dimensional graph showing a magnitude of a magnetic field according to dimensions of shielding linkages.
FIG. 5 is a graph showing a magnitude of a magnetic field according to a height of a connection opening.
FIG. 6 is a cross-sectional view of an encoder according to a comparative example.
FIG. 7 is a cross-sectional view of an encoder according to still another embodiment.
FIGs. 8A to 8D are views showing a magnetic field magnitude at an entrance of the connection opening according to positions of a high-magnetic-field object.
FIGs. 9A and 9B are graphs showing a phase difference according to an outer diameter of a ring magnet.
FIGs. 10A and 10B are perspective views showing application examples of the encoder according to the embodiment.

### [Best Mode]

The present disclosure will now be described more fully hereinafter with reference to the accompanying drawings, in which various embodiments are shown. The examples, however, may be embodied in many different forms and should not be construed as being limited to the embodiments set forth herein. It is to be understood that the present disclosure covers all modifications, equivalents, and alternatives falling within the scope and spirit of the present disclosure.

While ordinal numbers including "second," "first," etc. may be used to describe various components, they are not intended to limit the components. These expressions are used only to distinguish one component from another component. For example, a second element could be termed a first element, and, similarly, a first element could be termed a second element, without departing from the scope of the present disclosure. As used herein, the term "and/or" includes any and all combinations of one or more of the associated listed items.

It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

In the description of the embodiments, it will be understood that when an element, such as a layer (film), a region, a pattern or a structure, is referred to as being "on" or "under" another element, such as a substrate, a layer (film), a region, a pad or a pattern, the term "on" or "under" means that the element is "directly" on or under another element or is "indirectly" formed such that an intervening element may also be present. It will also be understood that criteria of on or under is on the basis of the drawing. In addition, the thickness or size of a layer (film), a region, a pattern or a structure shown in the drawings may be exaggerated, omitted or schematically drawn for the clarity and convenience of explanation, and may not accurately reflect the actual size.

The terminology used herein is for the purpose of describing particular embodiments only and is not intended to be limiting of exemplary embodiments of the disclosure. As used herein, the singular forms are intended to include the plural forms as well, unless the context clearly indicates otherwise. It will be further understood that the term "include" or "have", when used herein, specifies the presence of stated features, integers, steps, operations, elements, components, or combinations thereof, but do not preclude the presence or addition of one or more other features, integers, steps, operations, elements, components, or combinations thereof.

Unless otherwise defined, all terms used herein, which include technical or scientific terms, have the same meanings as those generally appreciated by those skilled in the art. The terms, such as ones defined in common dictionaries, should be interpreted as having the same meanings as terms in the context of pertinent technology, and should not be interpreted as having ideal or excessively formal meanings unless clearly defined in the specification.

Hereinafter, embodiments will be described in detail with reference to the accompanying drawings. The same or equivalent elements are denoted by the same reference numerals even when they are depicted in different drawings, and redundant descriptions thereof will be omitted.

In addition, some embodiments will be described using the Cartesian coordinate system (x-axis, y-axis, z-axis). In the Cartesian coordinate system, the x-axis, the y-axis, and the z-axis shown in each drawing are orthogonal to each other, but the embodiments are not limited thereto. The x-axis, the y-axis, and the z-axis may intersect each other obliquely.

Hereinafter, a rotary magnetic encoder (hereinafter referred to as an "encoder") according to an embodiment will be described with reference to the accompanying drawings.

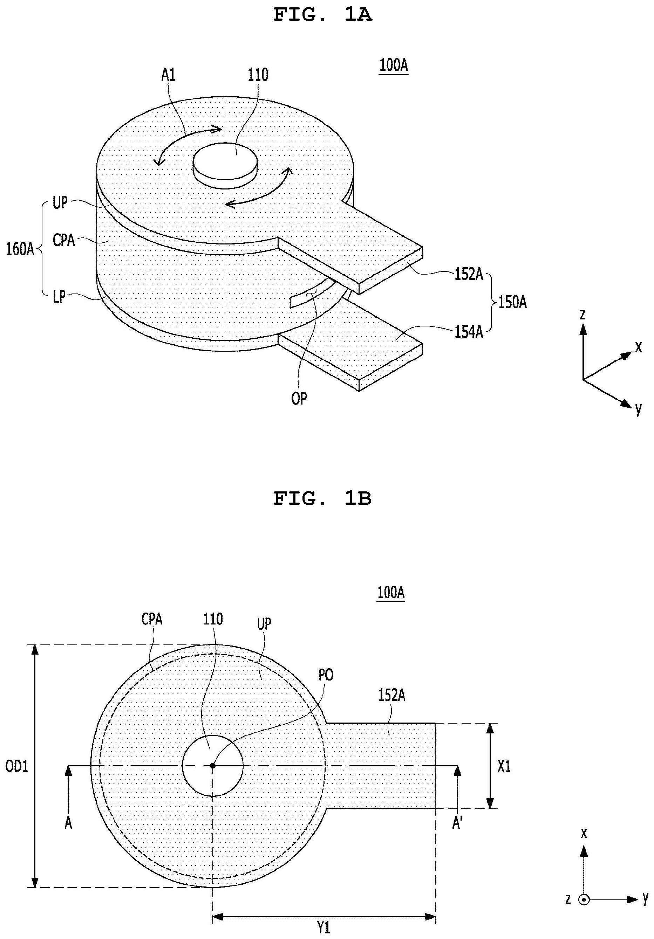

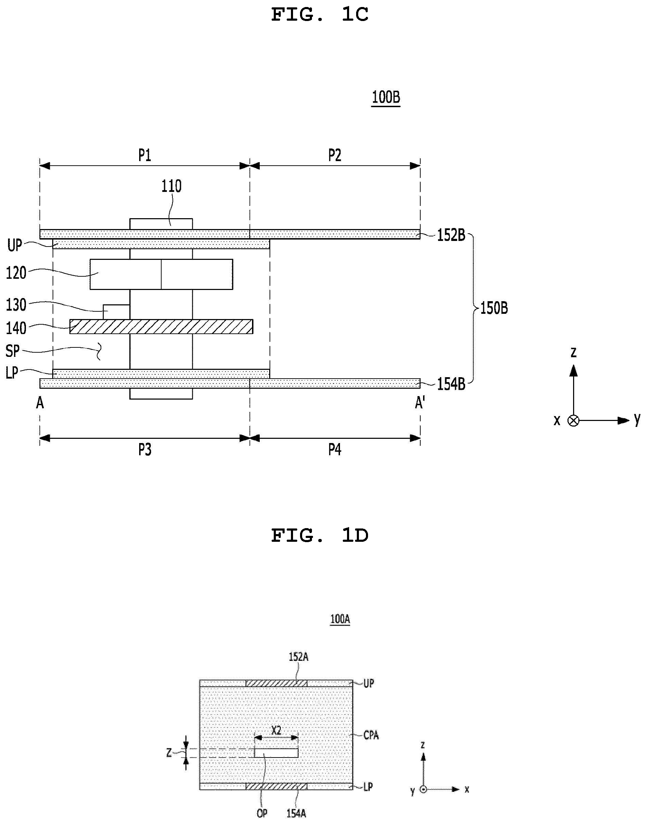

FIG. 1A is a perspective view showing an external appearance of an encoder 100A according to an embodiment, FIG. 1B is a plan view of the encoder 100A shown in FIG. 1A, FIG. 1C is a side cross-sectional view of an encoder 100B according to another embodiment, and FIG. 1D is a right side view of the encoder 100A shown in FIG. 1A when viewed from the right (i.e., in a -y-axis direction).

According to an embodiment, the encoder 100A or 100B includes a shaft 110, a ring magnet 120, a sensor 130, a shielding linkage 150A or 150B, and a case 160A.

The shaft 110 may perform rotational motion in an arrow direction A1. The shaft 110 may be formed of a material having magnetic permeability close to 1, for example, aluminum or plastic. However, the embodiments are not limited thereto. The shaft 110 may be coupled to an object, a rotation angle of which is to be sensed by the encoder 100A or 100B, and thus may be formed of a material having rigidity capable of maintaining coupling to the object. The shaft 110 may protrude upward and/or downward from the case 160A.

The ring magnet 120 may be coupled to the shaft 110 so as to be connected to and rotated together with the shaft 110. As the ring magnet 120 is rotated together with the shaft 110, a magnitude of a magnetic field measured by the sensor 130 may vary. For example, the ring magnet 120 may be formed of a general magnetic material having permeability, such as a neodymium (Nd) magnet or ferrite.

The sensor 130 may be disposed to face the ring magnet 120 and may sense a magnetic field that varies according to rotation of the ring magnet 120.

According to the embodiment, the encoder 100A or 100B may further include a substrate 140. The sensor 130 may be disposed on the substrate 140, and the substrate 140 may be coupled and fixed to the case 160A. Accordingly, when the shaft 110 and the ring magnet 120 perform rotational motion, the substrate 140 and the sensor 130 disposed on the substrate 140 may remain fixed without performing rotational motion. That is, the substrate 140 may be disposed to remain fixed during rotation of the shaft 110.

Although the sensor 130 is shown in FIG. 1C as being disposed on the substrate 140, the embodiments are not limited to any specific disposition of the sensor 130 relative to the substrate 140.

The case 160A may include an accommodation space SP defined therein to accommodate at least a portion of the shaft 110, the ring magnet 120, and the sensor 130.

The shielding linkage 150A or 150B may be disposed to protrude from the case 160A in a horizontal direction. According to the embodiment, the shielding linkage 150A or 150B may protrude while being offset from one side of the case 160A in a y-axis direction, which is the horizontal direction. That is, the shielding linkage 150A or 150B may protrude from the case 160A in the y-axis direction, which is a direction orthogonal to a z-axis direction corresponding to an axial direction of the shaft 110.

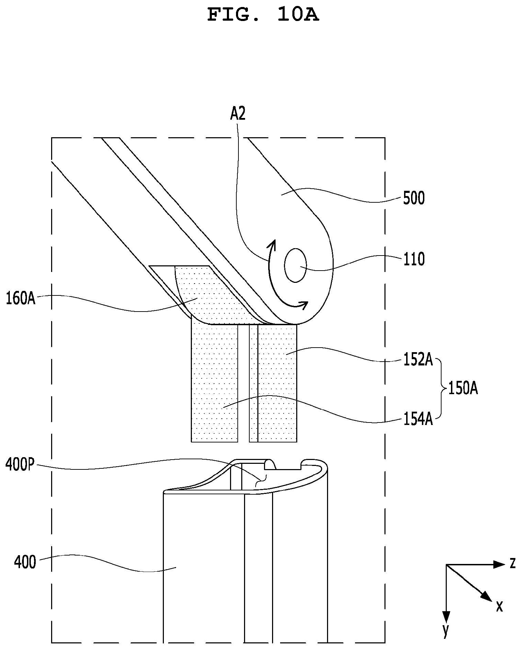

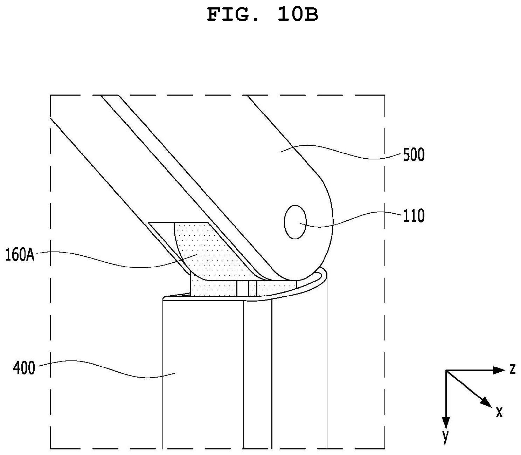

The shielding linkage 150A or 150B disposed as described above may suppress introduction of an external magnetic field into the encoder 100A or 100B, may suppress leakage of a magnetic field from the interior of the encoder 100A or 100B to the outside, and may serve as a bridge that facilitates coupling of the encoder 100A or 100B to an external structure. This will be described later with reference to FIGs. 10A and 10B.

According to the embodiment, the shielding linkage 150A may be formed of a magnetic material having permeability of 4,000 to 5,000, for example, carbon steel such as S45C or SPCC. However, the embodiments are not limited thereto. If the shielding linkage 150A or 150B is formed of a material having high permeability exceeding 5,000, absorption of a magnetic field may occur.

Referring to FIG. 1C, the ring magnet 120 may be disposed below an upper plate UP, the sensor 130 may be disposed below the ring magnet 120, and the substrate 140 may be disposed below the sensor 130 and above a lower plate LP.

Meanwhile, the case 160A may include the upper plate UP, a middle plate CPA, and the lower plate LP. The upper plate UP may be positioned at an upper side of the case 160A, and the lower plate LP may be disposed at a lower side of the case 160A, that is, below the upper plate UP. The middle plate CPA may be coupled to the upper plate UP and the lower plate LP to define the accommodation space SP.

According to the embodiment, the shielding linkage 150A or 150B may include an upper shielding portion 152A or 152B and a lower shielding portion 154A or 154B.

According to an embodiment, as shown in FIGs. 1A, 1B, and 1D, the upper shielding portion 152A may be disposed to protrude from one side of the upper plate UP in the y-axis direction, which is the horizontal direction, and the lower shielding portion 154A may be disposed to protrude from one side of the lower plate LP in the y-axis direction, which is the same as the protruding direction of the upper shielding portion 152A. That is, the upper shielding portion 152A and the lower shielding portion 154A may be disposed to protrude in the same direction. In this manner, according to an embodiment, the upper plate UP and the upper shielding portion 152A may be disposed on the same horizontal plane, and the lower plate LP and the lower shielding portion 154A may be disposed on the same horizontal plane.

According to another embodiment, as shown in FIG. 1C, the upper shielding portion 152B may include a first portion P1 disposed at an upper side of the case 160A, that is, on the upper plate UP, and a second portion P2 protruding from the first portion P1 in the y-axis direction, which is the horizontal direction. The lower shielding portion 154B may include a third portion P3 disposed at a lower side of the case 160A, that is, under the lower plate LP, and a fourth portion P4 protruding from the third portion P3 in the y-axis direction, which is the horizontal direction.

The upper shielding portion 152A and the lower shielding portion 154A shown in FIGs. 1A, 1B, and 1D may perform a shielding function. Similarly, the second and fourth portions P2 and P4 shown in FIG. 1C may perform a shielding function.

The encoder 100A and the encoder 100B have the same configuration, except that the shielding linkage 150A and the shielding linkage 150B differ in shape as described above. Accordingly, except for the shapes of the shielding linkage 150A and the shielding linkage 150B, FIG. 1C corresponds to a side cross-sectional view of the encoder 100A taken along line A-A' in FIG. 1B.

In addition, the configuration shown in FIGs. 1A, 1B, and 1D corresponds to a case in which the first portion P1 shown in FIG. 1C is integrally formed with the upper plate UP and the third portion P3 shown in FIG. 1C is integrally formed with the lower plate LP.

The encoder 100A or 100B according to the embodiment may further include a cable (not shown) connected to the sensor 130 and a controller (not shown) connected to the cable.

Change in magnetic field sensed by the sensor 130 may be transmitted to the controller (not shown) disposed outside through the cable (not shown), and a driving current for driving the sensor 130 required to sense change in magnetic field may be supplied to the sensor 130 from outside the encoder 100A or 100B through the cable. To this end, the case 160A may further include a connection opening OP.

The connection opening OP may serve to allow the interior of the case 160A to communicate with the outside, and may have a shape capable of receiving the cable inserted thereinto.

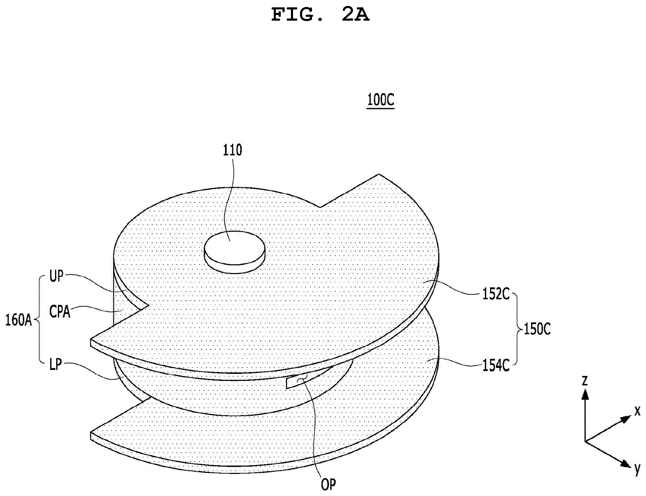

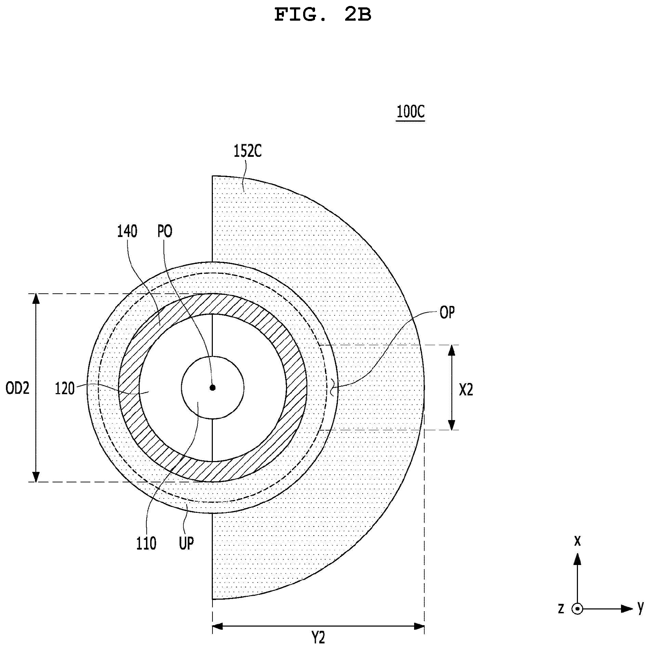

FIGs. 2A and 2B are, respectively, a perspective view and a plan view of an encoder 100C according to another embodiment.

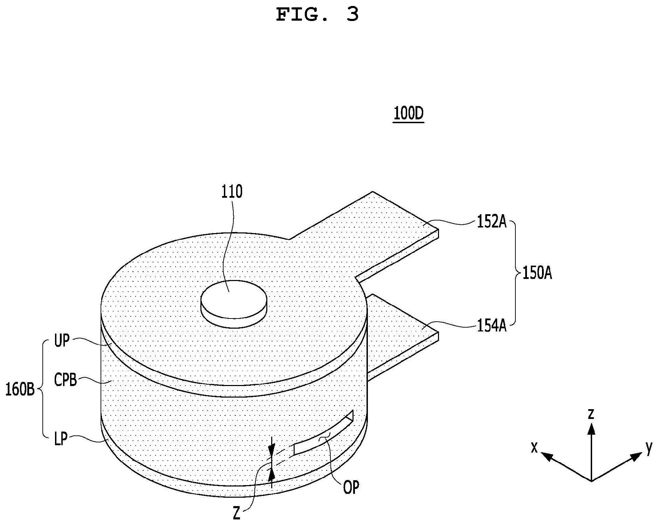

FIG. 3 is a perspective view of an encoder 100D according to still another embodiment.

According to an embodiment, as shown in FIGs. 1A to 1D and 3, at least a portion of the upper shielding portion 152A or 152B may have a rectangular planar shape, and at least a portion of the lower shielding portion 154A or 154B may have a rectangular bottom surface shape.

According to another embodiment, as shown in FIGs. 2A and 2B, at least a portion of the upper shielding portion 152C may have a semicircular planar shape. At least a portion of the lower shielding portion 154C may have a semicircular bottom surface shape.

As described above, except that the upper shielding portions 152A, 152B, and 152C differ in planar shape and the lower shielding portions 154A, 154B, and 154C differ in bottom surface shape, the encoder 100C shown in FIGs. 2A and 2B is the same as the encoders 100A and 100B shown in FIGs. 1A to 1D, and thus a redundant description thereof will be omitted.

Hereinafter, a direction in which the connection opening OP and the shaft 110 face each other will be referred to as a "first horizontal direction," and a direction in which the upper shielding portions 152A, 152B, and 152C and the lower shielding portions 154A, 154B, and 154C face the shaft 110 will be referred to as a "second horizontal direction."

According to an embodiment, as shown in FIG. 1A or FIG. 2A, the first horizontal direction and the second horizontal direction may be the same direction. That is, the connection opening OP and the shaft 110 may face each other in the first horizontal direction, which is the y-axis direction, and the upper shielding portion 152A or 152C and the lower shielding portion 154A or 154C may face the shaft 110 in the second horizontal direction, which is the y-axis direction.

According to another embodiment, as shown in FIG. 3, the first horizontal direction and the second horizontal direction may be different from each other. For example, the first horizontal direction and the second horizontal direction may be orthogonal to each other. That is, the connection opening OP and the shaft 110 may face each other in the first horizontal direction, which is an x-axis direction, whereas the upper shielding portion 152A or 152C and the lower shielding portion 154A or 154C may face the shaft 110 in the y-axis direction. That is, a position at which the connection opening OP is disposed in the middle plate CPA shown in FIG. 1A and a position at which the connection opening OP is disposed in the middle plate CPB shown in FIG. 3 are different from each other.

Hereinafter, sizes of the shielding linkage 150A or 150B and the connection opening OP according to the embodiment will be described.

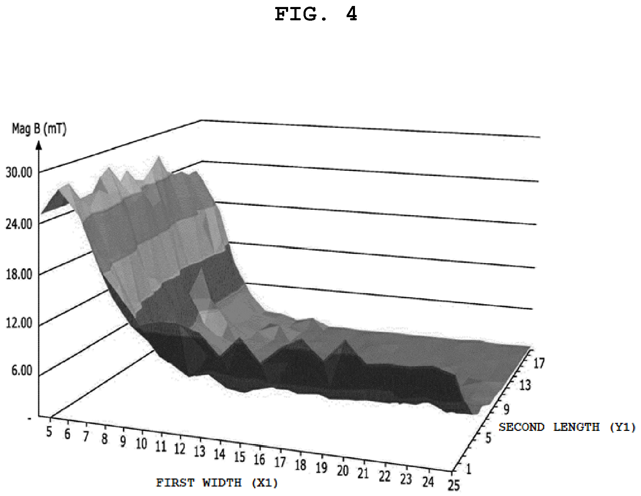

FIG. 4 is a three-dimensional graph showing a magnitude of a magnetic field Mag B according to dimensions X1 and Y1 of the shielding linkages 150A, 150B, and 150C. Here, X1 and Y1 will be described later.

Referring to FIG. 1B, a width X1 of each of the upper shielding portion 152A and the lower shielding portion 154A in the second direction (i.e., the x-axis direction), which is orthogonal to the first direction (i.e., the y-axis direction) in which each of the upper shielding portion 152A and the lower shielding portion 154A protrudes, is referred to as a "first width." In this case, the first width X1 may be 30% or more of an outer diameter OD1 (hereinafter referred to as a "first outer diameter") of the upper plate UP.

A length Y1 from a center PO of the shaft 110 to an end of at least one of the upper shielding portion 152A or the lower shielding portion 154A in the first direction (i.e., the y-axis direction) is referred to as a "first length." In this case, the first length Y1 may be 90% or more of the first outer diameter OD1 of the upper plate UP. For example, the first width X1 may be 3 mm to 5 mm, preferably 4 mm or more, and the first length Y1 may be 9 mm to 13 mm, preferably 11 mm or more. In addition, when the encoder 100C is implemented as shown in FIGs. 2A and 2B, the first length Y1 may increase. For example, a first length Y2 shown in FIGs. 2A and 2B may be 12.9 mm.

Although not shown, the first portion P1 shown in FIG. 1C has the same planar shape as the upper plate UP shown in FIG. 1B, and the second portion P2 has the same planar shape as the upper shielding portion 152A shown in FIG. 1B. In addition, the third portion P3 shown in FIG. 1C has the same bottom surface shape as the lower plate LP shown in FIG. 1B, and the fourth portion P4 has the same bottom surface shape as the lower shielding portion 154A shown in FIG. 1B.

In the configuration shown in FIG. 1C, a width of each of the upper shielding portion 152B and the lower shielding portion 154B in the second direction (i.e., the x-axis direction), which is orthogonal to the first direction (i.e., the y-axis direction) in which each of the upper shielding portion 152B and the lower shielding portion 154B protrudes, is referred to as a "second width." In this case, the second width may be 30% or more of the first outer diameter OD1 of the upper plate UP. A length from a center PO of the shaft 110 to an end of at least one of the second portion P2 or the fourth portion P4 in the first direction (i.e., the y-axis direction) is referred to as a "second length." In this case, the second length may be 90% or more of an outer diameter of the first or third portion P1 or P3.

In addition, the first length Y1 (or the second length) when the first horizontal direction and the second horizontal direction are orthogonal to each other, as shown in FIG. 3, may be 14.4 mm to 23.4 mm, which corresponds to 120% to 195% of the first length Y1 (or the second length) when the first horizontal direction and the second horizontal direction are the same, as shown in FIGs. 1A and 2A.

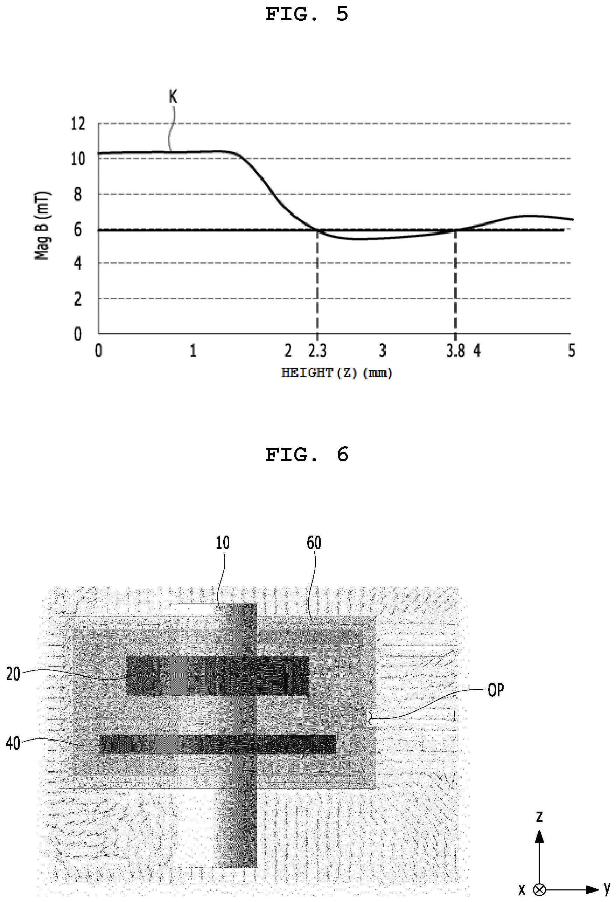

FIG. 5 is a graph showing a magnitude of a magnetic field Mag B according to a height of the connection opening OP, in which the horizontal axis represents the height of the connection opening OP and the vertical axis represents a magnitude of a magnetic field entering the connection opening OP. Accordingly, "K" represents a magnitude of a magnetic field entering the connection opening OP according to the height of the connection opening OP. In this case, a maximum magnitude of a magnetic field that the sensor 130 is capable of sensing is 6 mT.

According to the embodiment, a width X2 (hereinafter referred to as a "third width") of the connection opening OP in the second direction (i.e., the x-axis direction) shown in FIGs. 1A, 2A, and 2B may be 25% to 100% of the first width X1 of at least one of the upper shielding portion 152A or the lower shielding portion 154A in the second direction (i.e., the x-axis direction). For example, the third width X2 may be 1 mm to 4 mm.

According to the embodiment, in the case of the encoder 100B shown in FIG. 1C, the third width X2 of the connection opening OP in the second direction (i.e., the x-axis direction) may be 25% to 100% of the first width X1 of at least one of the second portion P2 or the fourth portion P4 in the second direction (i.e., the x-axis direction). For example, the third width X2 may be 1 mm to 4 mm.

In addition, a height Z of the connection opening OP in a third direction (i.e., a z-axis direction) shown in FIGs. 1A, 2A, 2B, and 3, which is orthogonal to each of the first and second directions, may be 57% to 95% of the first width X1 of at least one of the upper shielding portion 152A or 152C or the lower shielding portion 154A or 154C in the second direction (i.e., the x-axis direction). For example, the height Z may be 2.3 mm to 3.8 mm.

In the configuration shown in FIG. 1C, the height Z of the connection opening OP may be 57% to 95% of the first width X1 of at least one of the second portion P2 or the fourth portion P4.

Hereinafter, an encoder according to a comparative example and an encoder according to an embodiment will be described with reference to the accompanying drawings.

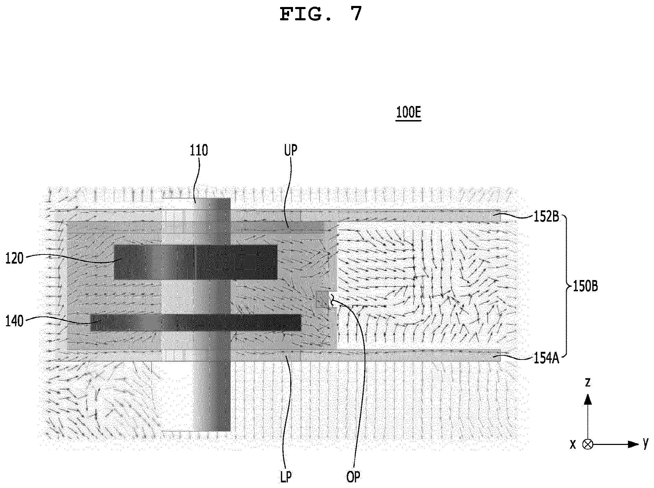

FIG. 6 is a cross-sectional view of an encoder according to a comparative example, and FIG. 7 is a cross-sectional view of an encoder 100E according to still another embodiment. In FIGs. 6 and 7, illustration of a sensor is omitted.

The configuration shown in FIG. 7 corresponds to a case in which the lower plate LP and the third and fourth portions P3 and P4 of the encoder 100B shown in FIG. 1C are implemented as the lower plate LP and the lower shielding portion as shown in FIG. 1D, and thus a redundant description thereof will be omitted.

The encoder according to the comparative example shown in FIG. 6 includes a shaft 10, a ring magnet 20, a substrate 40, and a case 60. The shaft 10, the ring magnet 20, the substrate 40, and the case 60 respectively perform the same functions as the shaft 110, the ring magnet 120, the substrate 140, and the case 160A according to the embodiment, and thus a redundant description thereof will be omitted.

The encoder according to the comparative example does not include the shielding linkage of the embodiment. Accordingly, as shown in FIG. 6, a magnetic field distributed around the connection opening OP penetrates the encoder and affects a magnetic field inside the encoder. Thus, the sensor is unable to accurately sense change in magnetic field caused by rotation of the ring magnet 20.

In contrast, referring to FIG. 7, in the embodiment, because the upper shielding portion 152B and the lower shielding portion 154A of the shielding linkage 150B absorb an external magnetic field, a magnitude of a magnetic field in a region around the connection opening OP may be reduced as compared with FIG. 6.

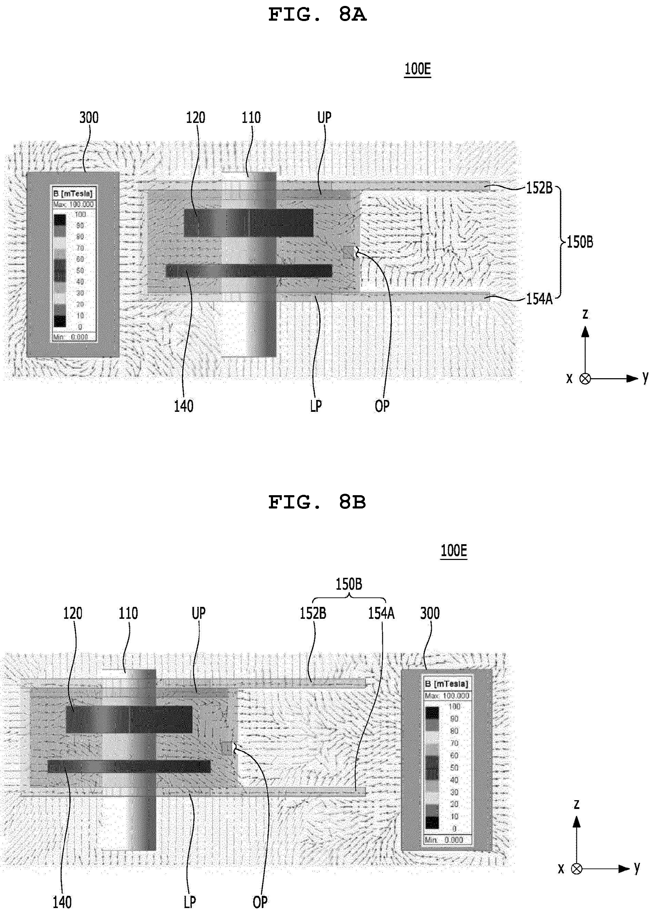

FIGs. 8A to 8D are views showing a magnetic field magnitude (hereinafter referred to as a "first magnitude") at an entrance of the connection opening OP according to positions of a high-magnetic-field object 300.

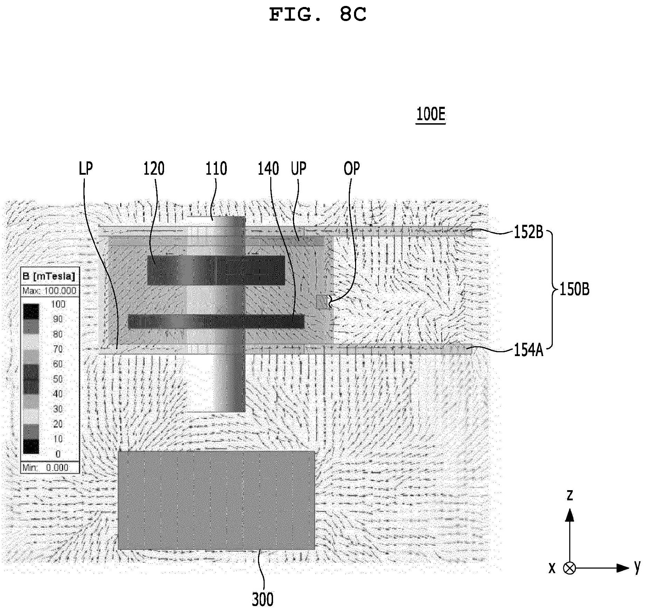

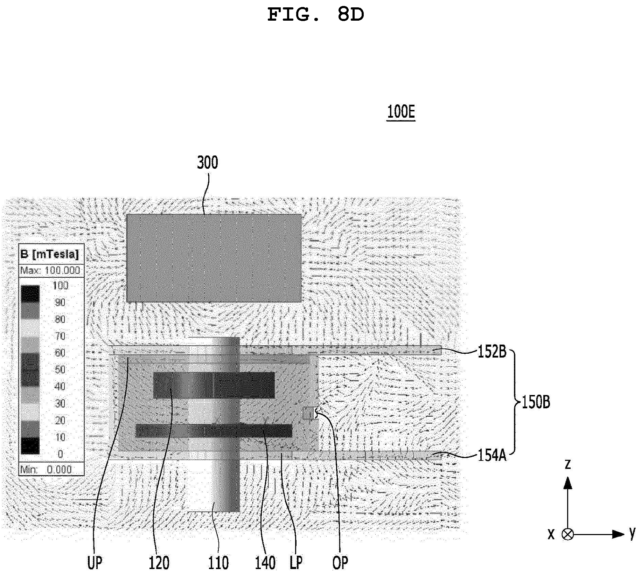

As shown in FIG. 8A, when the high-magnetic-field object 300 is disposed at a position opposite the connection opening OP, the first magnitude is 5.45 mT. As shown in FIG. 8B, when the high-magnetic-field object 300 is disposed to face the connection opening OP, the first magnitude is 2.37 mT. As shown in FIG. 8C, when the high-magnetic-field object 300 is disposed below the encoder 100E, the first magnitude is 5.14 mT. As shown in FIG. 8D, when the high-magnetic-field object 300 is disposed above the encoder 100E, the first magnitude is 5.01 mT.

In the comparative example shown in FIG. 6, a magnetic field magnitude (hereinafter referred to as a "second magnitude") at the entrance of the connection opening OP is measured as 24.5 mT. Accordingly, it can be seen that the first magnitude is reduced by 77.8% to 79.6% compared to the second magnitude.

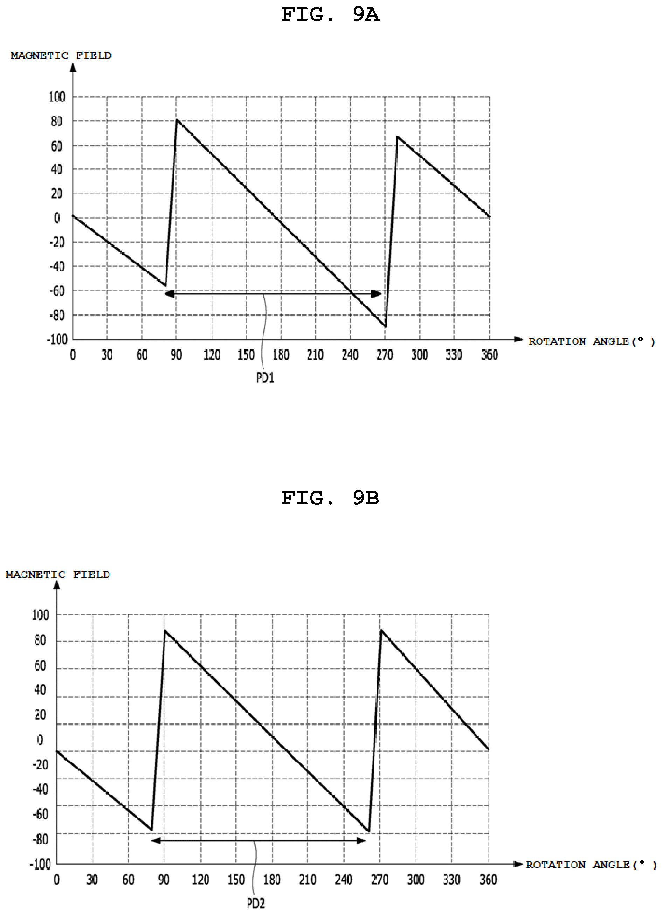

FIGs. 9A and 9B are graphs showing a phase difference according to an outer diameter OD2 (hereinafter referred to as a "second outer diameter") of the ring magnet 120, in which the horizontal axis represents a rotation angle of the shaft 110 and the vertical axis represents a magnetic field (or magnetic force).

If a magnetic field magnitude in the z-axis direction, which is the vertical direction, is less than a minimum magnetic field magnitude that the sensor 130 is capable of sensing, for example, if the second outer diameter OD2 is less than 58% or greater than 75% of the first outer diameter OD1, a phase difference error PD1 greater than or less than 180° may occur each time the shaft 110 is rotated by 180°, as shown in FIG. 9A.

In contrast, if a magnetic field magnitude in the z-axis direction, which is the vertical direction, is greater than the minimum magnetic field magnitude that the sensor 130 is capable of sensing, for example, if the second outer diameter OD2 is 58% to 75% of the first outer diameter OD1, a phase difference PD2 is maintained at 180° each time the shaft 110 is rotated by 180°, thereby preventing occurrence of a phase difference error, as shown in FIG. 9B. For example, when the minimum magnetic field magnitude that the sensor 130 is capable of sensing is 160 mT, the second outer diameter OD2 may be 6.4 mm to 8.2 mm. However, the embodiments are not limited thereto.

The encoders 100A to 100E according to the embodiments described above may perform sensing functions in a wide variety of applications. For example, the encoders 100A to 100E may be used not only in devices employing motors and drives, but also in all types of equipment related to automation. For example, the encoders 100A to 100E may be used for home appliances, elevators, speed control of conveyors, automation equipment, industrial equipment, and position control of robots.

FIGs. 10A and 10B are perspective views showing application examples of the encoder according to the embodiment.

The encoder shown in FIGs. 10A and 10B is the same as the encoder shown in FIG. 1A, and thus the same parts are denoted by the same reference numerals, and redundant descriptions thereof will be omitted.

As shown in FIGs. 10A and 10B, the shaft 110 of the encoder may be coupled to a first object 500 and may be used to measure a rotation angle of the first object 500 in an arrow direction A2.

In this case, the shielding linkage 150A of the encoder may be used to couple the encoder to a second object 400. For example, the shielding linkage 150A shown in FIG. 10A may be inserted into a hollow portion 400P of the second object 400, as shown in FIG. 10B, such that the encoder is coupled to the second object 400.

In order to couple the encoder according to the comparative example shown in FIG. 6 to the second object 400, a separate member needs to be mounted to the case 60.

In contrast, according to the embodiment, because the shielding linkage 150A is used to couple the encoder to the second object 400, a separate member is not required, thereby reducing a material cost and simplifying a manufacturing process.

While the present disclosure has been particularly shown and described with reference to exemplary embodiments thereof, these embodiments are only proposed for illustrative purposes, and do not restrict the present disclosure, and it will be apparent to those skilled in the art that various changes in form and detail may be made without departing from the essential characteristics of the embodiments set forth herein. For example, respective configurations set forth in the embodiments may be modified and applied. Further, differences in such modifications and applications should be construed as falling within the scope of the present disclosure as defined by the appended claims.

### [Mode for Disclosure]

Various embodiments have been described in the best mode for carrying out the disclosure.

### [Industrial Applicability]

The rotary magnetic encoder according to the embodiment may be widely used in precise and complex devices requiring motion control operations, such as automotive anti-lock brake systems (ABS), industrial automation equipment, medical devices, and robots.

## Claims

1. An encoder, comprising:
a shaft;
a ring magnet connected to the shaft;
a case configured to accommodate at least a portion of the shaft and the ring magnet; and
a shielding linkage disposed to protrude from the case in a first direction orthogonal to an axial direction of the shaft.

2. The encoder according to claim 1, further comprising:
a sensor disposed to face the ring magnet; and
a substrate coupled and fixed to the case, the sensor being disposed on the substrate.

3. The encoder according to claim 1, wherein the shielding linkage protrudes from one side of the case in the first direction.

4. The encoder according to claim 2, wherein the case includes:
an upper plate;
a lower plate disposed below the upper plate; and
a middle plate coupled to the upper plate and the lower plate, the middle plate including an accommodation space defined therein to accommodate at least a portion of the shaft, the ring magnet, and the sensor.

5. The encoder according to claim 4, wherein the shieling linkage includes:
an upper shielding portion protruding from one side of the upper plate in the first direction; and
a lower shielding portion protruding from one side of the lower plate in the same direction as a protruding direction of the upper shielding portion.

6. The encoder according to claim 5, further comprising a cable connected to the sensor,
wherein the case includes a connection opening formed therein to communicate with an outside and to allow the cable to be introduced into the connection opening.

7. The encoder according to claim 6, wherein the connection opening and the shaft face each other in the first direction, and
wherein each of the upper shielding portion and the lower shielding portion faces the shaft in a second direction.

8. The encoder according to claim 7, wherein the first direction and the second direction are identical to each other.

9. The encoder according to claim 7, wherein the first direction and the second direction are orthogonal to each other.

10. The encoder according to claim 5, wherein at least a portion of each of the upper shielding portion and the lower shielding portion has a rectangular shape.
